(19) Europäisches Patentamt
European Patent Office
Office européen des brevets

(11) Veröffentlichungsnummer: **0 137 371**
**B1**

(12) # EUROPÄISCHE PATENTSCHRIFT

(45) Veröffentlichungstag der Patentschrift: **31.05.89**

(51) Int. Cl.[4]: **C 07 B 55/00**

(21) Anmeldenummer: **84111206.3**

(22) Anmeldetag: **20.09.84**

(54) **Verfahren zur Racemisierung optisch aktiver Aminosäuren.**

(30) Priorität: **27.09.83 DE 3334849**

(43) Veröffentlichungstag der Anmeldung: **17.04.85 Patentblatt 85/16**

(45) Bekanntmachung des Hinweises auf die Patenterteilung: **31.05.89 Patentblatt 89/22**

(84) Benannte Vertragsstaaten: **AT CH DE FR GB IT LI NL SE**

(56) Entgegenhaltungen:
**DE-A-1 543 919**
**DE-A-1 964 420**
**DE-A-2 352 579**

(73) Patentinhaber: **HOECHST AKTIENGESELLSCHAFT, Postfach 80 03 20, D-6230 Frankfurt am Main 80 (DE)**

(72) Erfinder: **Grabley, Susanne, Dr., Hölderlinstrasse 7, D-6240 Königstein/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 137 371 B1

LIBER, STOCKHOLM 1989

## Beschreibung

Bei biologisch wirksamen Verbindungen ist häufig die eine der optischen Antipoden Wirksamer als die andere bzw. allein wirksam und damit Wirkungsvoller als das Racemat. Es wurden deshalb schon viele Verfahren zur Trennung optischer Antipoden entwickelt, darunter auch die enzymatische Trennung von N-Acyl-D,L-Aminosäuren, wobei eine Acylase nur die L-Komponente entacyliert, wahrend die N-Acyl-D-Aminosäure unverändert bleibt (britische Patentschrift 1 369 462, deutsche Offenlegungsschriften 2 446 320 und 2 939 269 sowie deutsche Patentschrift 3 048 612).

Bei diesen Verfahren fällt also ein Produktgemisch aus freier L-Aminosäure, der bei der Entacylierung freigesetzten Carbonsäure und der unveränderten N-Acyl-D-Aminosäure an. Nach Isolierung der gewünschten L-Aminosäure bleibt somit die unveränderte D-Acylverbindung im Gemisch mit der freigesetzten Carbonsäure zurück. Es ist bereits bekannt, diese N-Acyl-D-Aminosäure zu racemisieren und das Racemat erneut in den Prozeß zurückzuführen. Hierzu wurde diese Verbindung nach Abtrennung des Wassers - gegebenenfalls in Form eines azeotropen Gemischs - geschmolzen (deutsche Offenlegungsschdift 2 446 320). Andere Verfahren racemisieren unter Einwirkung von Acetanhydrid und/oder Essigsäure (deutsche Offenlegungsschriften 1 963 991 und 2 939 269, britische Patentschrift 1 369 462) bzw. mit Hilfe spezieller Lösemittel, darunter niedere Fettsäuren (deutsche Offenlegungsschrift 2 352 579). Bei diesem letzteren Verfahren wurde auch schon darauf hingewiesen, daß gegebenenfalls auf die Abtrennung der freigesetzten Säure verzichtet werden kann. Allerdings wurden in den Beispielen nur Acetylverbindungen eingesetzt, wobei also Essigsäure freigesetzt wird - eine niedere Fettsäure, die ohnehin als spezielles Lösemittel vorgesehen ist.

Es wurde nun gefunden, daß optisch aktive Aminosäuren durch Erhitzen mit aromatischen oder araliphatischen Carbonsäuren besonders vorteilhaft racemisiert werden. Der Begriff "Aminosäuren" umfaßt hierbei die freie Säure, die N-Acylderivate sowie die Salze. Bevorzugte Ausgestaltungen dieser Erfindung werden im folgenden näher erläutert:

Es genügen bereits katalytische Mengen an diesen schwerflüchtigen carbonsäuren, beispielsweise eine Einsatzmenge von 1 bis 10 Mol-%. Es können jedoch auch höhere Mengen an Carbonsäure, beispielsweise äquimolare Mengen oder ein Überschuß an Säure, eingesetzt werden, wobei die Säure dann als Löse- bzw. Verdünnungsmittel dienen kann. Ein Zusatz inerter Löse- bzw. Verdünnungsmittel erbringt demgegenüber keinen Vorteil, es wird deshalb also vorzugsweise in Abwesenheit von solchen inerten Löse- bzw. Verdünnungsmitteln gearbeitet.

Der Einsatz äquimolarer Mengen an Carbonsäure ist dann bevorzugt, wenn ein Reaktionsgemisch aus einer enzymatischen Racematspaltung eingesetzt wird und die abgespaltene Carbonsäure schwerflüchtig ist. In diesem Falle wird also das Reaktionsgemisch nach Abtrennen der gewünschten L-Aminosäure und Entfernung des Wassers unmittelbar zur Racemisierung erhitzt.

Die Racemisierung erfolgt zweckmäßig in einem Temperaturbereich von 80 bis 200, vorzugsweise 130 bis 190, insbesondere 160 bis 180°C, wobei höhere Temperaturen kürzeren Reaktionszeiten entsprechen. Im allgemeinen erfolgt die Racemisierung innerhalb von 5 - 30 Minuten und ohne merkliche Zersetzung von Ausgangsmaterial oder Produkt.

Die Abtrennung der schwerflüchtigen Carbonsäure vom Racemisierungsprodukt kann auf Grund des unterschiedlichen $pK_a$-Werts, beispielsweise mit Hilfe von Ionenaustauschern, vorteilhafter jedoch auf Grund der unterschiedlichen Löslichkeit erfolgen, zweckmäßig durch Extraktion mit einem organischen Lösemittel. Bevorzugt sind unpolare bis mäßig polare Lösemittel, beispielsweise aliphatische, cycloaliphatische oder aromatische Kohlenwasserstoffe wie Hexan, Cyclohexan oder Toluol, halogenierte Kohlenwasserstoffe wie Methylenchlorid oder Chloroform, Ether wie Diethyleter, Glykoldimethylether oder Tetrahydrofuran sowie Ester wie Ethylacetat. Im Einzelfall kann ein geeignetes Lösemittel durch einen einfachen Vorversuch erprobt werden.

Die abgetrennte Komponente, im allgemeinen die leichter lösliche Carbonsäure, kann aus der Lösung nach bekannten Methoden, beispielsweise durch Destillation oder Kristallisation, zurückgewonnen werden.

Bevorzugte aromatische Carbonsäuren sind beispielsweise Benzoesäure und bevorzugte araliphatische Säuren sind z. B. Phenylessigsäure sowie deren kernsubstituierte Derivate, die ein- oder mehrfach durch gleiche oder unterschiedliche Substituenten aus der Reihe Halogen, vorzugsweise Brom oder Fluor, insbesondere Chlor, niederes Alkyl, insbesondere Methyl, niederes Alkoxy, insbesondere Methoxy, Hydroxy, Acyloxy, insbesondere Acetoxy, oder Nitro substituiert sind.

Bevorzugte optisch aktive Aminosäuren, die erfindungsgemäß racemisiert werden, entsprechen der Formel

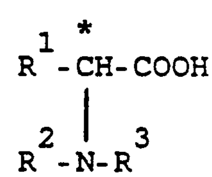

in der

$R^1$ gegebenenfalls substituiertes niederes Alkyl oder Phenyl,

$R^2$ Wasserstoff oder zusammen mit $R^1$ niederes Alkylen und

$R^3$ Wasserstoff oder Acyl bedeuten, wobei als Acyl insbesondere solche Acylgruppen in Betracht kommen, für die eine Acylase zur Racemattrennung zur Verfügung steht. In einer weiteren bevorzugten Ausführungsform kommt für $R^3$ der Acylrest einer schwerflüchtigen Carbonsäure in Betracht, da dann - wie vorstehend ausgeführt - nach enzymatischer Racemattrennung und Abtrennung der freigesetzten Aminosäure und des Wassers das verbleibende Gemisch unmittelbar der erfindungsgemäßen Racemisierung zugeführt werden kann.

Bevorzugte Bubstituenten an der niederen Alkylgruppe $R^1$ sind diejenigen Reste, die bei natürlichen Aminosäuren auftreten, also Hydroxy, Mercapto, niederes Alkylmercapto, Carboxy, Cadboxamido, Amino, Guanidino, Indolyl, Imidazolyl, Phenyl oder substituiertes Phenyl, insbesondere Hydroxyphenyl, wobei die Hydroxy-, Mercapto- und basischen Gruppen frei oder acyliert vodliegen können. Ein weiterer bevorzugtes Substituent an der Gruppe $R^1$ ist die niedere Alkylphosphinogruppe, insbesondere als Rest $R^1$ der 2-(Methylphosphino)-ethylrest.

In den folgenden Beispielen wird die Erfindung näher erläutert.

**Beispiel 1**

5,4 g N-Phenacetyl-L-Methionin werden mit 2,7 g Phenylessigsäure vermischt und unter Rühren schnell auf 180° C erhitzt. Bei dieser Temperatur sinkt der Drehwert der Reaktionsmischung innerhalb von 5 bis 10 Minuten auf 0°.

Nach Extraktion der Phenylessigsäure mit Diethylether werden 5 g (93 % d. Th.) N-Phenacetyl-D,L-Methionin isoliert.

**Beispiel 2**

5,7 g N-Phenacetyl-D-Phenylalanin werden entsprechend Beispiel 1 mit 2,7 g Phenylessigsäure auf 170° C erhitzt. Nach 10 Minuten sind etwa 90 % racemisiert, nach 20 Minuten ist die Racemisierung vollständig.

Nach Abtrennung der Phenylessigsäure durch Extraktion mit Dichlormethan lassen sich 5,1 g (90 % d. Th.) N-Phenacetyl-D,L-Phenylalanin isolieren.

**Beispiel 3**

3 g N-Phenacetyl-D-Phenylglycin werden mit 1 g Phenylessigsäure vermengt und auf 170° C erhitzt. Nach 15 Minuten ist die Racemisierung abgeschlossen.

**Beispiel 4**

4,7 g N-Phenacetyl-L-Valin werden mit 1,5 g Phenylessigsäure auf 180° C erhitzt. Nach 5 Minuten ist der Drehwert auf 0° gesunken.

Nach Extraktion mit Cyclohexan lassen sich 4 g N-Phenacetyl-D,L-Valin (85 % d. Th.) erhalten.

**Beispiel 5**

3 g N-Benzoyl-L-Methionin werden mit 1,6 g Phenylessigsäure vermischt und auf 165° C erhitzt. Nach 15 Minuten ist die Racemisierung vollständig. Nach Extraktion mit Dichlormethan/Cyclohexan bleiben 2,6 g (78 % d. Th.) N-Benzoyl-D,L-Methionin zurück.

**Beispiel 6**

5,1 g N-Benzoyl-L-Methionin werden mit 2,5 g Benzoesäure versetzt und in einem 180° C heißen Ölbad unter Rühren erhitzt. Nach 25 Minuten ist die Racemisierung abgeschlossen.

Nach Entfernen der Benzoesäure werden 4,1 g (82 % d. Th.) N-Benzoyl-D,L-Methionin erhalten.

**Beispiel 7**

15 g D-2-Phenacetylamino-4-methylphosphinobuttersäure werden im Gemisch mit 6,8 g Phenylessigsäure schnell auf 180° C erhitzt und die Racemisierung durch Probennahme und Drehwertmessung verfolgt. Nach 20 - 25 Minuten ist der Drehwert auf 0° gefallen. Nach Extraktion mit Toluol/Wasser bleiben 13,8 g (92 % d. Th.) D,L-2-Phenacetylamino-4-methylphosphinobuttersäure zurück.

**Beispiel 8**

5 g D-2-Amino-4-methylphosphinobuttersäure werden mit 3,7 g Phenylessigsäure vermengt und innerhalb von 30 Minuten auf 180° C erhitzt. Bei dieser Temperatur ist nach 5 Minuten die Racemisierung vollständig. Nach Extraktion mit Dichlormethan werden 4,5 g (90 %) D,L-2-Amino-4-methylphosphinobuttersäure isoliert.

**Beispiel 9**

5 g L-2-Amino-4-methylphosphinobuttersäure-Ammoniumsalz werden im Gemisch mit 3,4 g Phenylessigsäure auf 180° C erhitzt. Nach 30 Minuten ist der Drehwert auf 0° gefallen. Nach

Extraktion mit Chloroform werden 4,6 g (92 % d. Th.) D,L-2-Amino-4-methylphosphinobuttersäure-ammoniumsalz erhalten.

Anstelle des Ammoniumsalzes kann auch ein Alkalisalz, beispielsweise das Natriumsalz, eingesetzt werden.

**Patentansprüche**

1. Verfahren zur Racemisierung optisch aktiver Aminosäuren durch Erhitzen mit Carbonsäuren, dadurch gekennzeichnet, daß die Carbonsäure eine aromatische oder araliphatische Carbonsäure ist.

2. Verfahren nach Anspruch 1, dadurch gekennzeichnet, daß man katalytische Mengen an aromatischen oder araliphatischen Carbonsäuren einsetzt.

3. Verfahren nach Anspruch 1, dadurch gekennzeichnet, daß man äquimolare Mengen an aromatischen oder araliphatischen Carbonsäuren einsetzt.

4. Verfahren nach Anspruch 1, dadurch gekennzeichnet, daß man einen Überschuß an aromatischen oder araliphatischen Carbonsäuren einsetzt.

5. Verfahren nach Anspruch 1 und 3, dadurch gekennzeichnet, daß man ein Reaktionsgemisch aus einer enzymatischen Racematspaltung einsetzt, aus dem die L-Aminosäure und das Wasser entfernt wurden.

6. Verfahren nach einem der vorhergehenden Ansprüche, dadurch gekennzeichnet, daß die Racemisierung bei 80 bis 200° C erfolgt.

7. Verfahren nach Anspruch 6, dadurch gekennzeichnet, daß die Racemisierung bei 130 bis 190° C erfolgt.

8. Verfahren nach Anspruch 6 oder 7, dadurch gekennzeichnet, daß die Racemisierung bei 160 bis 180° C erfolgt.

9. Verfahren nach einem der vorhergehenden Ansprüche, dadurch gekennzeichnet, daß die aromatische Carbonsäure, Benzoesäure oder Phenylessigsäure ist.

**Claims**

1. A process for the racemization of optically active amino acids by heating with carboxylic acids, wherein the arboxylic acid is an aromatic or araliphatic carboxylic acid.

2. The process as claimed in claim 1, wherein catalytic quantities of aromatic or araliphatic carboxylic acids are used.

3. The process as claimed in claim 1, wherein equimolar quantities of aromatic or araliphatic carboxylic acids are used.

4. The process as claimed in claim 1, wherein an excess of aromatic or araliphatic carboxylic acids is used.

5. The process as claimed in claim 1 and 3, wherein a reaction mixture from an enzymatic racemate resolution is used, from which the L-aminoacid and the water have been removed.

6. The process as claimed in any one of the preceding claims, wherein the racemization is carried out at 80 to 200° C.

7. The process as claimed in claim 6, wherein the racemization is carried out at 130 to 190° C.

8. The process as claimed in claim 6 or 7, wherein the racemization is carried out at 160 - 180° C.

9. The process as claimed in any one of the preceding claims, wherein the aromatic carboxylic acid is benzoic acid or phenylacetic acid.

**Revendications**

1. Procédé pour la racémisation d'aminoacides optiquement actifs, par chauffage avec des acides carboxyliques, caractérisé en ce que l'acide carboxylique est un acide carboxylique aromatique ou araliphatique.

2. Procédé selon la revendication 1, caractérisé en ce que l'on utilise des quantités catalytiques d'acides carboxyliques aromatiques ou araliphatiques.

3. Procédé selon la revendication 1, caractérisé en ce qué l'on utilise des quantités équimolaires d'acides carboxyliques aromatiques ou araliphatiques.

4. Procédé sélon la revendication 1, caractérisé en ce qué l'on utilise un excès d'acides carboxyliques aromatiques ou araliphatiques.

5. Procédé selon les revendications 1 et 3, caractérisé en ce que l'on utilise un mélange réactionnel provenant d'un dédoublement enzymatique de racémique, mélange hors duquel ont été éliminés le L-aminoacide et l'eau.

6. Procédé selon l'une des revendications précédentes, caractérisé en ce que la racémisation est effectuée à 80 - 200° C.

7. Procédé selon la revendication 6, caractérisé en ce que la racémisation est effectuée à 130 - 190° C.

8. Procédé selon la revendication 6 ou 7, caractérisé en ce que la racémisation est effectuée à 160 - 180° C.

9. Procédé selon l'une des revendications précédentes, caractérisé en ce que l'acide carboxylique aromatique est l'acide benzoïque ou l'acide phénylacétique.